Europäisches Patentamt

European Patent Office

Office européen des brevets

(11) Numéro de publication: **0 482 268 A1**

## DEMANDE DE BREVET EUROPEEN

(21) Numéro de dépôt: **90450014.7**

(51) Int. Cl.5: **F16C 29/00**

(22) Date de dépôt: **24.10.90**

(43) Date de publication de la demande:
**29.04.92 Bulletin 92/18**

(84) Etats contractants désignés:
**AT BE CH DE DK ES FR GB GR IT LI LU NL SE**

(71) Demandeur: **Lecomte, Marc**
**9, rue Plaisance**
**F-33700 Merignac(FR)**

(72) Inventeur: **Lecomte, Marc**
**9, rue Plaisance**
**F-33700 Merignac(FR)**

(74) Mandataire: **Trolliet, Jean-Claude**
**Cabinet BURDIPAT 20, cours du Chapeau**
**Rouge**
**F-33000 Bordeaux(FR)**

(54) **Module de guidage linéaire et de translation.**

(57) Module de guidage linéaire et de translation d'au moins un élément coulissant (7) le long d'un rail de guidage (2) support linéaire par l'intermédiaire d'un corps d'écrou solidaire de l'élément coulissant (7) se déplaçant le long d'un arbre cylindrique fileté (6) lorsque ce dernier est animé d'un mouvement rotatif, lesdites pièces constitutives étant maintenues, contenues et installées dans un carter (10) comportant une paroi de fond (11) et parois latérales opposées (12) dont les faces internes (12A) sont aménagées de rails de guidage (13) parallèles à l'arbre cylindrique fileté (6) sur lesquels est maintenue et coulisse au moins une paire de pièces de guidage (14) disposées à l'avant et à l'arrière de l'élément coulissant et dont chaque pièce de guidage (14) est pourvue d'un alésage central (15) coaxial à l'arbre cylindrique (6) fileté permettant son passage et de part et d'autre dudit alésage des évidements (16) permettant leur emboîtement et coulissement sur les rails (13) du carter (10), les pièces (14) indépendantes de l'élément coulissant (7) sont reliées entre elles par des organes rigides de connexion (17).

Fig.2

La présente invention est relative à un module de guidage linéaire et de translation d'au moins un élément coulissant le long d'un rail support linéaire par l'intermédiaire d'un corps d'écrou solidaire de l'élément coulissant, ce dernier se déplaçant sur un arbre cylindrique fileté immobilisé en translation lorsqu'il est animé d'un mouvement rotatif, les différentes pièces constitutives étant maintenues et installées dans un carter comportant une paroi de fond et des parois latérales verticales opposées aménagées pour recevoir et maintenir des éléments permettant de réduire jusqu'à éliminer la flexion de l'arbre cylindrique fileté lors de sa rotation.

On connaît par le brevet EP 0340751 A2, un module de guidage linéaire et de translation d'au moins un élément coulissant sur un rail support linéaire au moyen d'une courroie sans fin sur laquelle est fixé l'élément coulissant, ladite courroie étant tendue entre deux poulies dont l'une est motrice pour permettre son déplacement et le positionnement de l'élément coulissant, ledit brevet décrit aussi que le déplacement de l'élément coulissant peut être réalisé au moyen d'une vis à billes dont le corps de l'écrou de l'élément coulissant se déplace le long de l'arbre cylindrique fileté lorsqu'il est soumis à un mouvement rotatif, le sens du déplacement de l'élément coulissant dépendant du sens de rotation de l'arbre cylindrique fileté. Les éléments constitutifs étant contenus dans un carter. Ce mode de réalisation présente certains inconvénients notamment au niveau de l'arbre fileté qui dans la plupart des cas ne peut pas conserver son état rectiligne car il est infléchi par son propre poids ou par une flexion inhérente intervenant fréquemment quand l'arbre fileté est animé de rotation ce qui provoque une oscillation. Par l'intermédiaire de ladite oscillation la charge est imposée à la partie d'engagement entre le corps d'écrou et l'arbre de telle sorte que ces pièces ou éléments sont usés ou endommagés à un stade précoce. Par ailleurs, l'oscillation est transmise à l'élément coulissant par le corps d'écrou et par conséquent la charge par oscillation est imposée à la partie s'engageant entre l'élément coulissant et le rail de support linéaire de telle sorte que ces pièces ou éléments sont également usés ou endommagés à un stade précoce. De plus par la rotation de l'arbre fileté dans des conditions fléchies, la charge est imposée aux paliers en extrémités opposées de l'arbre de telle sorte que les paliers sont également usés ou endommagés à un stade précoce.

Par ailleurs, quand le dispositif de guidage linéaire est monté, le corps d'écrou et l'élément coulissant ne peuvent pas être montés avec précision en place dans le carter où l'arbre fileté est infléchi, de telle sorte qu'en exploitation, une charge déséquilibrée est imposée au corps de l'écrou et à l'élément coulissant. Ceci implique également une usure et un endommagement du corps de l'écrou, de l'élément coulissant et du rail de support linéaire à un stade précoce.

Par ailleurs dans un dispositif de guidage linéaire dans lequel un seul rail de support linéaire est utilisé, l'élément coulissant bascule plus facilement quand une force latérale, notamment la force que crée le mouvement de rotation sur le rail de support linéaire, est exercée sur l'élément coulissant en raison du fait que la stabilité de l'élément coulissant est faible, et par conséquent le positionnement d'un objet transporté par l'élément coulissant a été perturbé.

L'invention a pour but de pallier aux inconvénients précédemment exposés.

L'invention a pour objet un module de guidage linéaire et de translation d'au moins un élément coulissant pouvant être déplacé le long d'un rail support linéaire par l'intermédiaire d'un corps d'écrou solidaire de l'élément coulissant se déplaçant le long d'un arbre cylindrique fileté lorsque ce dernier inamovible axialement est animé d'un mouvement rotatif, lesdites pièces ou éléments constitutifs étant maintenus, contenus et installés dans un carter comportant une paroi de fond et des parois latérales opposées, caractérisé par les faces internes des parois latérales opposées aménagées de rails de guidage linéaires parallèles à l'arbre cylindrique fileté sur lesquels est maintenue au moins une paire de pièces de guidage disposées à l'avant et à l'arrière de l'élément coulissant comportant le corps d'écrou, lesdites pièces de guidage indépendantes de l'élément coulissant étant pourvues d'un alésage central coaxial avec l'arbre cylindrique fileté de diamètre permettant le passage dudit arbre fileté sans jeu important et de part et d'autre dudit alésage des évidements permettant leur emboîtement et coulissement sur les rails de guidage parallèles du carter, lesdites pièces de guidage indépendantes de l'élément coulissant sont reliées entre elles par des organes rigides de connexion.

D'autres caractéristiques et avantages de l'invention ressortiront plus clairement de la description qui va suivre faite en regard des dessins joints donnés à titre d'exemple non limitatif, où :

- la figure 1 est une vue en perspective des pièces constitutives du module de guidage linéaire et de translation, lesdites pièces étant représentées hors du carter,
- la figure 2, une vue en coupe selon la figure 1 du dispositif de guidage linéaire de translation, les pièces constitutives étant contenues à l'intérieur du carter,

- les figures 3 et 4, des vues en coupe selon la figure 1 présentant des variantes au niveau des rails de guidage linéaire parallèle du carter,
- les figures 5 et 6, des vues latérales schématiques représentant la position des différentes pièces mobiles durant le déplacement de l'élément coulissant,
- les figures 7, 8 et 9, des vues latérales schématiques d'une variante de réalisation présentant deux paires de pièces de guidage réparties de part et d'autre de l'élément coulissant.

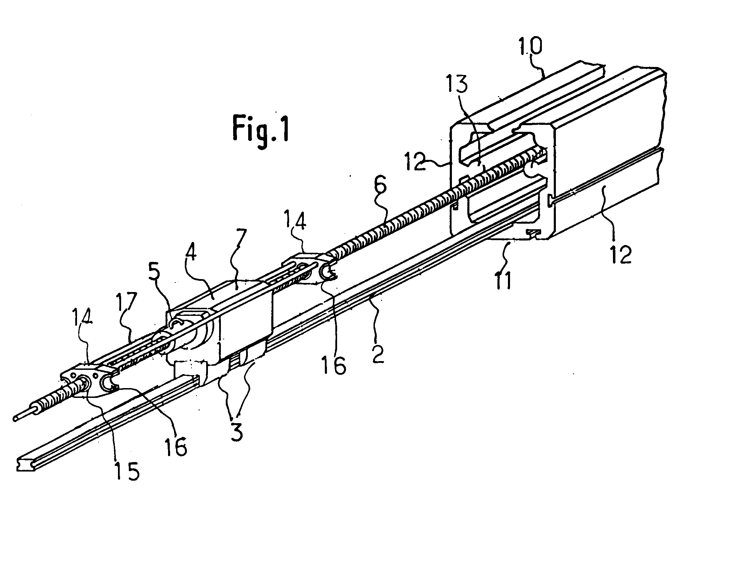

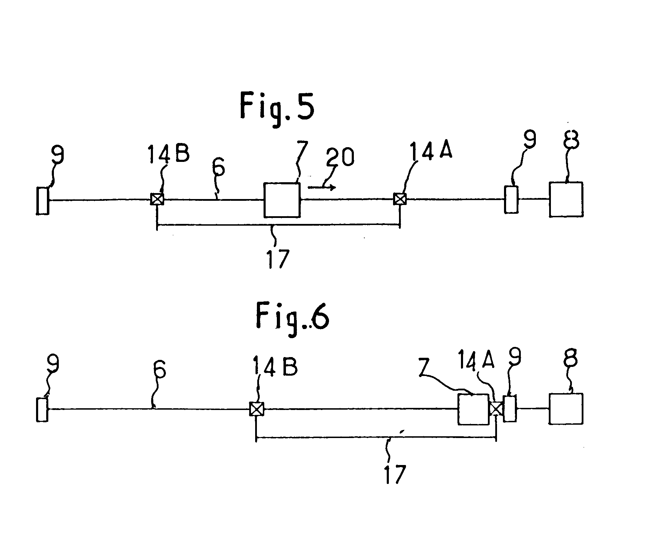

Tel que représenté figures 1 et 2, 3 et 4, le module du guidage et de translation linéaire 1 comporte un rail guide de précision 2 sur lequel est maintenu et coulisse au moins un patin 3 recevant un chariot 4 constituant un élément coulissant 7 destiné à recevoir et maintenir des organes de positionnement ou éléments d'usinage, de manière parallèle et en prolongement de l'axe vertical au rail 2 est disposé un arbre cylindrique fileté 6 sur lequel se visse un corps d'écrou 5 solidaire de l'élément coulissant 7, ledit corps d'écrou 5 à billes par exemple ou tout autre, étant disposé en une des extrémités du chariot 4 ou selon une variante non représentée est encastré dans un évidement aménagé à cet effet au centre dudit chariot 4, le mouvement en rotation de l'arbre cylindrique fileté 6 dans un sens ou dans l'autre par des moyens connus tels que moteur-réducteur 8 placé en une extrémité du module, engendre le déplacement de l'élément coulissant 7 le long du rail 2, ledit arbre cylindrique fileté 6 étant maintenu comme représenté figures 5 à 9 en ses extrémités par des paliers 9.

Les pièces constitutives, rail 2, élément coulissant 7, arbres cylindriques filetés 6 sont contenues, maintenues et disposées à l'intérieur d'un carter 10 comportant une paroi de fond 11 et des parois latérales parallèles et symétriques 12, sur les faces internes 12A desquelles sont aménagées en saillie des rils de guidage linéaire 13 parallèles à l'arbre cylindrique fileté 6 et selon le prolongement de son axe horizontal ou de manière décalée sur lesquels est maintenue au moins une paire de pièces de guidage 14 disposée à l'avant et à l'arrière de l'élément coulissant 7, elles sont pourvues d'un alésage central 15 coaxial avec l'arbre cylindrique fileté 6 d'un diamètre permettant le passage dudit arbre 6 sans jeu important, de part et d'autre de l'alésage central 15 sont aménagés des évidements 16 correspondant au profil des rails linéaires 13 et ce de manière à permettre leur coulissement et maintien sur lesdits rails 13 lors du déplacement de l'élément coulissant 7, lesdites pièces de guidage 14 indépendantes de l'élément coulissant 7 sont reliées entre elles selon une distance prédéterminée au moyen d'organes rigides de connexion 17, de sorte à limiter les frottements dus à la rotation de l'arbre cylindrique fileté 6 et favoriser le glissement des évidements 16 sur les rails linéaires 13 des bagues auto-lubrifiantes 18 et 19 sont maintenues, la bague 18 à l'intérieur de l'alésage 15 et les bagues 19 à l'intérieur des évidements 16, il va de soi que lesdits alésages sont prévus en dimension pour recevoir lesdites bagues 18 et 19. Il va de soi que l'usage des bagues 18 et 19 dépend de la matière moulable utilisée pour réaliser les pièces de guidage 14, si ladite matière est auto-lubrifiante lesdites bagues sont superflues.

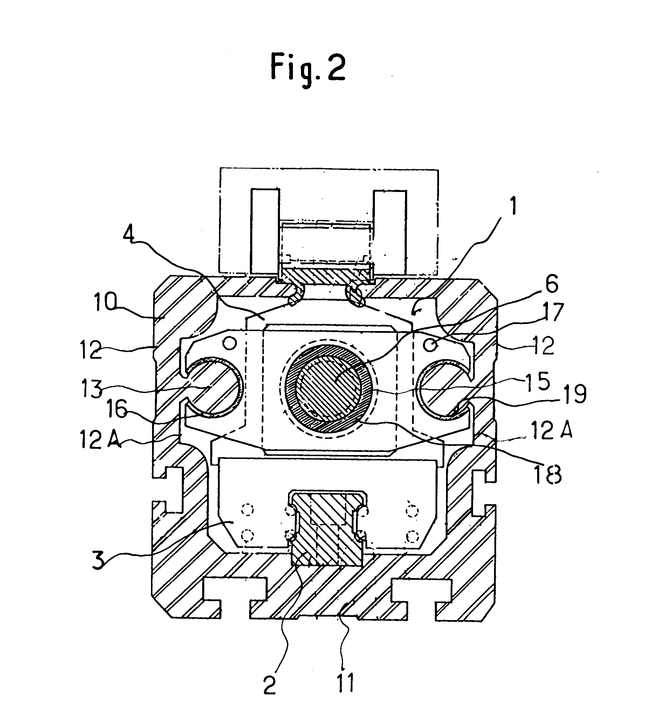

Tel que représenté figures 1 et 2, les rails de guidage linéaire 13 présentent une section circulaire dont l'arc présente un angle supérieur à 180°, les évidements 16 correspondant auxdites sections circulaires présentent un arc d'angle sensiblement inférieur afin de permettre le coulissement desdites pièces de guidage 14.

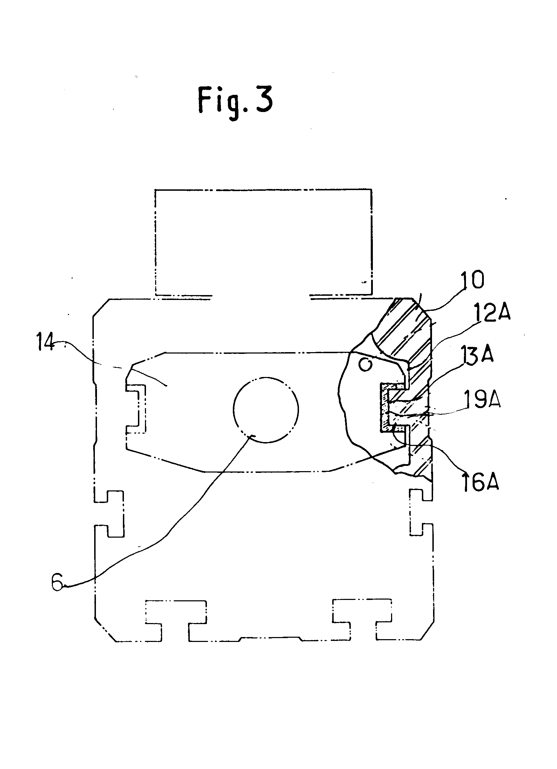

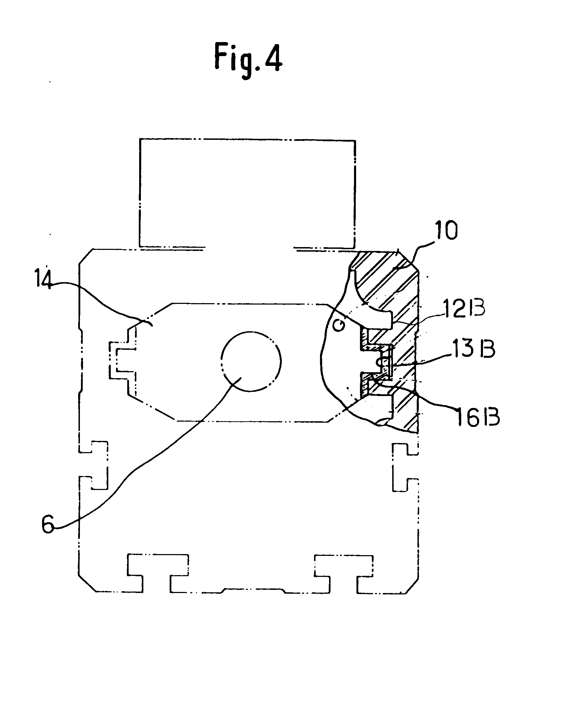

Selon la variante représentée figure 3, les rails de guidage linéaire 13A aménagés sur les faces internes 12A présentent une section saillante rectangulaire correspondant à la section des évidements 16A aménagés sur les pièces de guidage 14 dotées comme précédemment décrit de bagues auto-lubrifiantes 19A, selon la figure 4, les rails de guidage linéaire 13B sont aménagés en retrait sur les faces internes 12B, elles présentent aussi une section rectangulaire recevant la section correspondante 16B aménagée sur les pièces de guidage 14, les bagues auto-lubrifiantes étant disposées sur la section 16B ou sont incluses dans la section du rail de guidage 13B, il va de soi que les rails 13 peuvent présenter diverses sections en concordance avec les sections similaires des évidements 16 aménagés sur les pièces de guidage coulissantes 14 et l'usage de bagues auto-lubrifiantes dépend de la matière moulable utilisée pour la réalisation des pièces de guidage 14 comme précédemment décrit.

Comme représenté figures 5 et 6, les pièces de guidage 14 sont disposées à l'avant 14A et à l'arrière 14B de l'élément coulissant 7, quand ce dernier se déplace selon le sens de la flèche 20 lors de la rotation de l'arbre cylindrique fileté 6 et qu'il vient buter contre la pièce de guidage avant 14A cette dernière par l'élément coulissant 7 entraîne grâce aux organes rigides de connexion 17 la pièce de guidage arrière 14B et ce jusqu'à la position représentée figure 6, durant ledit déplacement de l'élément coulissant 7 et des pièces de guidage 14A et 14B, l'arbre cylindrique fileté 6 est maintenu selon un état parfaitement rectiligne de telle sorte qu'il n'implique pas d'occilation inhérente à l'élément coulissant 7 et ne provoque pas d'usure prématurée des organes constituant l'élément coulissant 7, des paliers supports 9 et du rail 2 durant la rotation de l'arbre cylindrique fileté 6.

Par ailleurs, la partie de l'arbre cylindrique fileté 6 placé entre les pièces de guidage 14A et 14B est parfaitement maintenue, tel que représenté figure 5, de même que pour la représentation figure 6 entre la pièce de guidage arrière 14B et l'élément coulissant 7.

Compte tenu de la portion d'arbre fileté 6 entre les pièces de guidage 14 maintenues stationnaires, l'inclinaison vers la droite ou vers la gauche de l'élément coulissant 7 due au porte-à-faux d'un objet tel qu'un outil de travail est empêchée ou limitée grâce auxdites pièces de guidage 14A et 14B.

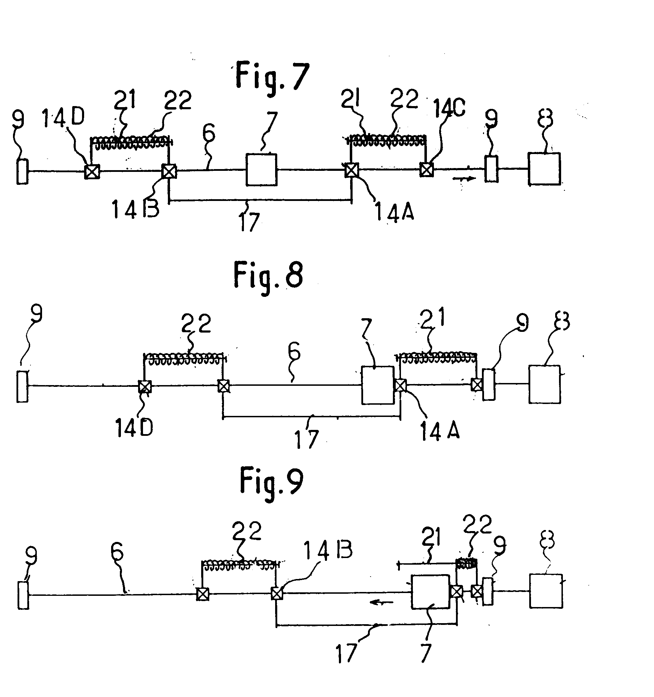

Selon les variantes représentées figures 7, 8 et 9, de manière à augmenter la longueur de translation de l'élément coulissant 7 et de ce fait augmenter la portion de l'arbre cylindrique fileté 6 entre les paliers 9, les pièces de guidage 14A et 14B sont doublées par une pièce similaire 14C à l'avant de la pièce 14A et 14D à l'arrière de la pièce 14B, les pièces 14A et 14B indépendantes de l'élément coulissant 7 étant reliées entre elles comme précédemment décrit par des organes rigides de connexion 17 selon une distance prédéterminée tandis que la pièce de guidage avant 14A est reliée par un organe de connexion rigide 21 fixe sur la pièce 14C et coulissant sur la pièce 14A, de même que pour les pièces de guidage 14B et 14D l'organe de connexion 21 est fixé sur la pièce 14D et coulisse sur la pièce 14B, sur les éléments de connexion rigides 21 peuvent être enfilés et maintenus des ressorts 22 en appui sur les pièces 14A et 14C, 14B et 14D de sorte à provoquer le déplacement de la pièce 14C lors du positionnement de l'élément coulissant 7 représenté figure 8, le prolongement du déplacement tel que représenté figure 9 engendrant la compression du ressort 22, lors du déplacement inverse de l'élément coulissant 7 le ressort 22 se décomprime tout en maintenant la pièce de guidage 14C et ce jusqu'au déploiement complet du ressort 22 ou tout au moins de l'appui de l'extrémité 23 de l'organe de connexion 21 sur la pièce 14A, la description faite pour le déplacement dans un sens de l'élément coulissant 7 est valable pour le déplacement de l'élément coulissant 7 dans l'autre sens, le fait de doubler les pièces de guidage 14 a pour effet de reculer le seuil des oscillations et de conserver une rectitude de l'élément fileté 6 entre les pièces 14D-14B et 14A-14C.

## Revendications

1. Module de guidage linéaire et de translation d'au moins un élément coulissant pouvant être déplacé le long d'un rail support linéaire par l'intermédiaire d'un corps d'écrou solidaire de l'élément coulissant se déplaçant le long d'un arbre cylindrique fileté lorsque ce dernier inamovible axialement est animé d'un mouvement rotatif, lesdites pièces ou éléments constitutifs étant maintenus, contenus et installés dans un carter comportant une paroi de fond et des parois latérales opposées, caractérisé par les faces internes (12A) des parois latérales (12) du carter (10) aménagées de rails de guidage linéaire (13) parallèles à l'arbre cylindrique fileté (6) sur lesquels est maintenue au moins une paire de pièces de guidage (14) disposées à l'avant et l'arrière de l'élément coulissant (7) comportant le corps d'écrou (5), lesdites pièces de guidage (14) indépendantes de l'élément coulissant (7) étant pourvues d'un alésage central (15) coaxial avec l'arbre cylindrique fileté (6) de diamètre permettant le passage dudit arbre (6) et de part et d'autre dudit alésage des évidements (16) permettant leur emboîtement et coulissant sur les rails (13) lors du déplacement de l'élément coulissant (7).

2. Module de guidage linéaire et de translation selon la revendication 1 caractérisé par les pièces de guidage (14) disposées à l'avant et l'arrière de l'élément coulissant de manière indépendante reliées entre elles à une distance prédéterminée par des organes rigides de connexion (17).

3. Module de guidage linéaire et de translation selon la revendication 1 caractérisé par les rails de guidage linéaire (13) présentant une section circulaire saillante dont l'arc présente un angle supérieur à 180°, les évidements (16) correspondant des pièces de guidage (14) un angle sensiblement inférieur.

4. Module de guidage linéaire et de translation selon la revendication 1 caractérisé par les sections des rails de guidage (13) présentant des sections (13A) rectangulaires saillantes ou (13B) en retrait, les évidements (16A) présentant une section pouvant s'adapter ) la section (13A) et (16B) à celle de la section (13B).

5. Module de guidage linéaire et de translation selon la revendication 1 caractérisé par la paire de pièces de guidage (14) de part et d'autre de l'élément coulissant (7), (14A) à l'avant et (14B) à l'arrière sont doublées par une pièce similaire (14C) à l'avant de la pièce (14A) et (14D) à l'arrière, lesdites pièces (14A, 14C) étant reliées par un organe rigide de connexion (21) fixé sur la pièce (14C) et coulissant sur la pièce (14A) de même que pour les pièces (14B, 14D) fixée sur (14D) et coulissant sur (14B).

6. Module de guidage linéaire et de translation selon la revendication 5 caractérisé par les éléments de connexion rigides (21) pouvant recevoir un ressort (22) en appui sur les pièces (14A-14C, 14B-14D) compressible lors du déplacement de l'élément coulissant (7).

7. Module de guidage linéaire et de translation selon la revendication 1 caractérisé par les évidements (15, 16) dotés de bagues auto-lubrifiantes (18, 19) selon le matériau moulable utilisé pour la réalisation des pièces de guidage (14).

8. Module de guidage linéaire et de translation selon la revendication 1 caractérisé par le corps d'écrou (5) à billes par exemple ou tout autre, solidaire du chariot (4) disposé en extrémité dudit chariot (4) ou encastré dans un évidement aménagé au centre du chariot (4).

9. Module de guidage linéaire et de translation selon la revendication 1 caractérisé par les rails linéaires de guidage (13) aménagés en saillie ou retrait parallèles à l'arbre cylindrique fileté (6) en prolongement de son axe horizontal ou de manière décalée.

# Fig.1

# Fig.2

# Fig. 3

# Fig.4

## Fig.5

## Fig.6

Fig. 7

Fig. 8

Fig. 9

**Office européen des brevets**

# RAPPORT DE RECHERCHE EUROPEENNE

Numéro de la demande

**EP 90 45 0014**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 106 826  (U.K.F.FASTH) <br> * revendications 1-3; figures 1,2 * | 1 | F 16 C 29/00 |
| A | IDEM | 3,4,7,9 | |
| | – – – | | |
| Y | GB-A-2 106 821  (C.BEHRENS AG) <br> * page 3, lignes 1-64; figures 1-3 * | 1 | |
| A | IDEM | 5 | |
| | – – – | | |
| A | GB-A-2 088 519  (ELEKTROWATT AG) <br> * page 1, lignes 97-128; figures 1,2 * | 1,2 | |
| | – – – – – | | |

| DOMAINES TECHNIQUES RECHERCHES (Int. Cl.5) |
|---|
| F 16 C <br> F 16 H |

**Le présent rapport de recherche a été établi pour toutes les revendications**

| Lieu de la recherche | Date d'achèvement de la recherche | Examinateur |
|---|---|---|
| Berlin | 29 mai 91 | HOFFMANN M.P. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant